# EUROPÄISCHE PATENTANMELDUNG

(11) **EP 2 939 904 A1**
(43) Veröffentlichungstag der Anmeldung: **04.11.2015**
(21) Anmeldenummer: 15163729.5
(22) Anmeldetag: 15.04.2015
(51) Int. Cl.: B62B 3/14, F16B 7/18

(54) **TRANSPORTWAGEN**

(30) Priorität: 28.04.2014 DE 202014101976 U
(71) Anmelder: Wanzl Metallwarenfabrik GmbH, 89340 Leipheim (DE)
(72) Erfinder: Müller, Ralf, 86657 Bissingen (DE)

(57) **Zusammenfassung**

Die Erfindung betrifft einen Rohrverbinder für den Einsatz an einem stapelbarer Transportwagen zum Verbinden von zwei Rohrstücken (2).

Die Erfindung zeichnet sich dadurch aus, dass der Rohrverbinder (1) aus zwei parallel zueinander angeordneten Stäben (4) gebildet ist, die mittels mindestens eines Verbindungsteils (6) miteinander verbunden sind.

## Beschreibung

Die Erfindung betrifft einen Rohrverbinder für den Einsatz an einem stapelbaren Transportwagen mit den Merkmalen im Oberbegriff des Hauptanspruchs.

Stapelbare Transportwagen sind aus dem Stand der Technik bekannt. Ein solcher weist ein Fahrgestell mit Rollen auf. Am Fahrgestell ist ein Griff vorgesehen. Mittels des Schiebegriffs kann der Wagen geschoben oder gezogen werden. Verwendung findet ein solcher Wagen meist in Supermärkten oder weitläufigen Shopping Malls.

Aus der EP 2 626 274 A2 ist ein Rohrverbinder für das Verbinden von zwei Ovalrohrstücken bekannt, der aus einem glasfaserverstärktem PA hergestellt ist, wobei mittels zwei Metallteilen ausreichend Stabilität erzielt wird.

Das Einbringen des Rohrverbinders ist jedoch gerade bei unterschiedlichen Toleranzen von Rohren u.U. schwierig. Auch kommt es vor, dass zwischen einem Rohrabschnitt (im Stand der Technik wird dieser als Träger bezeichnet) und dem Rohrverbinder zu viel Spiel besteht.

Die Aufgabe der vorliegenden Erfindung besteht daher darin, einen Rohrverbinder aufzuzeigen, der auf einfache Art und Weise in die Rohrabschnitte eingebracht werden kann und auch bestehende Maßtoleranzen kompensiert.

Die Erfindung löst die Aufgabe mit den Merkmalen im Hauptanspruch. Weitere vorteilhafte Ausführungen sind in den Unteransprüchen beschrieben.

Der Rohrverbinder kann auf einfache Art eingebracht werden. Je nach Größe und Art des Rohres können die Stäbe ausgelegt werden, die Einsatz finden sollen.

Zudem ist eine weitere Fixierung von Rohrstück und Rohrverbinder vorgesehen, so dass mittels Spreizung mögliche Toleranzen ausgeglichen werden können und ferner eine sichere Verbindung der Rohrstücke hergestellt werden kann.

Darüber hinaus kann der folgend aufgezeigte Rohrverbinder kostengünstig hergestellt und auf einfache Art montiert werden.

Die Erfindung wird anhand von drei Ausführungsbeispielen näher erläutert. Es zeigt
- Fig. 1 a,: b einen Rohrverbinder in perspektivischer Ansicht,
- Fig. 2 a, b,c: den Rohrverbinder, eingebracht in zwei Rohrstücke, in perspektivischer Ansicht,
- Fig. 3 a, b: den Rohrverbinder, eingebracht in ein Rohrstück, in perspektivischer Ansicht,

Die Erfindung beschreibt einen Rohrverbinder 1 zum Verbinden von zwei Rohrstücken 2. Insbesondere soll dieser Rohrverbinder 1 für das Verbinden von zwei Rohrstücken 2 verwendet werden, wie sie bei Transportwagen oder Einkaufswagen in Form von Holmen (Trägern) eingesetzt werden. Aber auch ein anderer Einsatz wäre denkbar, wenn es darum geht, Rohrstücke 2 dauerhaft aber wechselbar miteinander zu verbinden. Der Querschnitt dieses Rohrstücks 2 ist hierbei beliebig gestaltbar. Im vorliegenden Beispiel handelt es sich um ein Ovalrohr.

Zum Verbinden dieser beiden Rohrstücke 2 ist ein Rohrverbinder 1 eingesetzt, der aus zwei Stäben 4 gebildet ist, die mittels eines Verbindungsteils 6 miteinander verbunden sind. Die Stärke der Stäbe 4 richtet sich nach dem Durchmesser des Rohrs 2.

An den Enden 5 der Stäbe 4 ist je ein Abstandsblech 7 als Verbindungsteil 6 vorgesehen. In den Figuren ist dieses Verbindungsteil 6 als keilförmiges Bauteil dargestellt. Eine andere konstruktive Lösung ist hierbei denkbar.

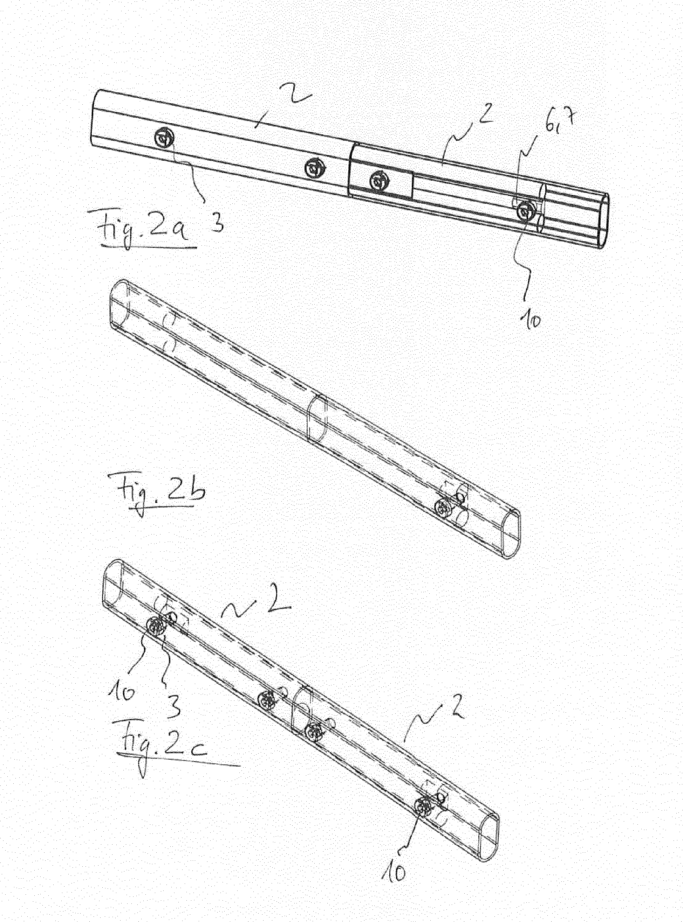

Jedes dieser Verbindungsteile 6, bzw. der Abstandsbleche 7, weist eine Bohrung 8 auf. Diese dient der Aufnahme eines Sicherungsmittels 10 (siehe Fig. 2 a, c oder 3b). Je nach Stärke der Stäbe 4, bzw. dem Durchmesser des Rohrs 2 ist der Durchmesser der Bohrung 8 entsprechend zu wählen. Im vorliegenden Fall hat sich ein Durchmesser für die Bohrung 8 im Bereich von ca. 0,5 bis 1,5 cm als sinnvoll erwiesen. Andere Durchmesser sind aber denkbar.

Damit die dauerhafte Sicherung des Rohrverbinders 1 in den Rohrstücken 2 sichergestellt sein kann, weisen auch die Rohrstücke 2 Bohrungen 3 auf.

Die Bohrungen 3 der Rohrstücke 2 wirken mit den Bohrungen 8 der Abstandsbleche 7 zusammen und können mittels eines Sicherungsmittels 10 zusammengefügt werden. Der Durchmesser dieser Bohrungen 3 richtet sich nach der Größe des eingesetzten Sicherungsmittels 10. Die Position der Bohrung 3 ist derart zu wählen, dass das Sicherungsmittel 10 Rohrverbinder 1 und Rohrstück 2 miteinander verbinden lässt.

Der Einsatz von zwei Sicherungsmittel 10 pro Rohrstück 2 hat sich als sinnvoll erwiesen. Hierbei greift eines der Sicherungsmittel 10 in das Verbindungsteil 6, das zweite Sicherungsmittel 10 führt bis zur gegenüberliegenden Wandung des Rohrstücks 2 und verleiht der Verbindung zusätzlich Stabilität.

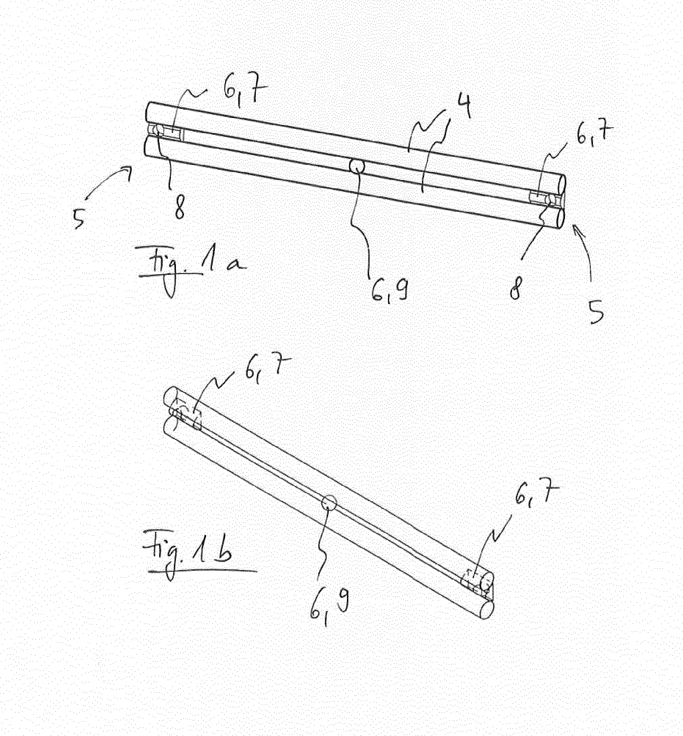

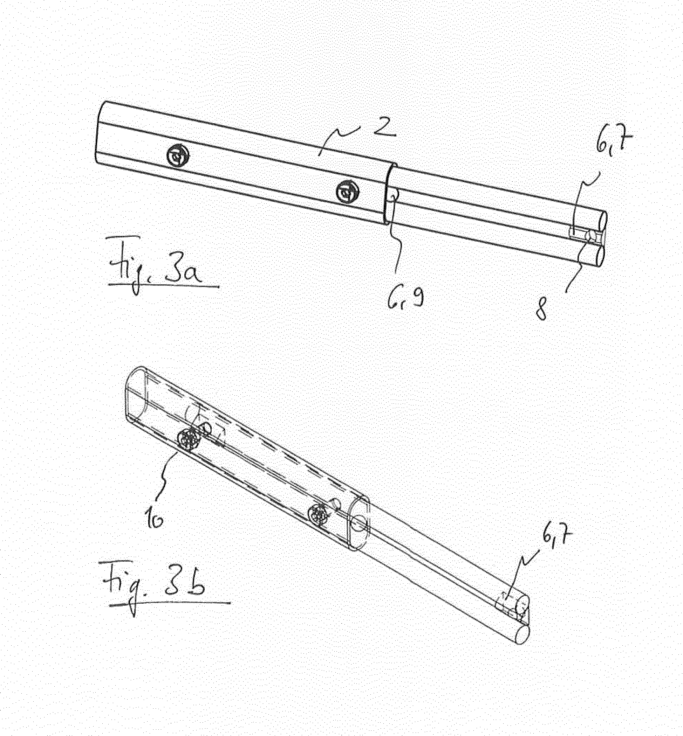

Darüber hinaus ist, wie in den Figuren 1a, b und 3 a dargestellt, in der Mitte des Rohrverbinders 1 eine Kugel 9 als weiteres Verbindungsteil 6 der beiden Stäbe 4 vorgesehen. Der Durchmesser der Kugel 9 richtet sich nach der Größe des Durchmessers des eingesetzten Rohrstücks 2. Ein vorteilhafter Bereich des Durchmessers der Kugel 9 liegt bei ca. 0,5 bis 1,5 cm. Andere Bereiche sind aber durchaus denkbar. Ferner könnte auch ein Bauteil eingesetzt werden, das eine andere Form aufweist.

Für den Einsatz in Holmen eines nicht näher dargestellten Transport- oder Einkaufswagens haben sich Stäbe 4 als vorteilhaft erwiesen, die eine Länge von ca. 10 bis 30 cm aufweisen. Es sind aber auch andere Längen denkbar.

Als Material für den Rohrverbinder 1 würde sich z.B. ein C9D anbieten.

Hinsichtlich der Art der Anordnung des Rohrverbinders 1 ergeben sich verschiedene Möglichkeiten. Es hat sich als sinnvoll erwiesen, wenn die Sicherungsmittel 10, wie in Fig. 2c dargestellt, an beiden Rohrstücken 2 Einsatz finden, so dass ein Wechsel bzw. ein Ausbau des Rohrverbinders 1 jederzeit möglich ist.

In manchen Fällen kann es aber auch Sinn machen, eines der beiden Enden des Rohrverbindes 1 ortsfest im Rohrstück 2 anzuordnen. Hier bietet sich z.B. eine Schweißverbindung an. Dies zeigt z.B. Figur 2b.

In einer weiterführenden Ausführung wird der Rohrverbinder 1 für eine Veränderung in Hinblick auf die Länge des Rohrstücks 2 eingesetzt. Es bestünde die Möglichkeit somit, z.B. beim Einsatz bei einem Transportwagen, diesen in der Höhe zu verändern.

### Bezugszeichenliste

- 1: Rohrverbinder
- 2: Rohrstück, Rohr
- 3: Bohrung (Rohrstück)
- 4: Stab
- 5: Ende Stab
- 6: Verbindungsteil
- 7: Abstandsblech
- 8: Bohrung (Abstandsblech)
- 9: Kugel
- 10: Sicherungsmittel

## Patentansprüche

1. Rohrverbinder für den Einsatz an einem stapelbarer Transportwagen zum Verbinden von zwei Rohrstücken (2), **dadurch gekennzeichnet, dass** der Rohrverbinder (1) aus zwei Stäben (4) gebildet ist, die mittels mindestens eines Verbindungsteils (6) miteinander verbunden sind.

2. Rohrverbinder nach Anspruch 1, **dadurch gekennzeichnet, dass** an den Enden (5) der Stäbe (4) je ein Abstandsblech (7) als Verbindungsteil (6) vorgesehen ist.

3. Rohrverbinder nach Anspruch 2, **dadurch gekennzeichnet, dass** jedes Abstandsblech (7) eine Bohrung (8) aufweist

4. Rohrverbinder nach Anspruch 3, **dadurch gekennzeichnet, dass** der Durchmesser der Bohrung (8) im Bereich von ca. 0,5 bis 1,5 cm ausgeführt ist.

5. Rohrverbinder nach Anspruch 1, **dadurch gekennzeichnet, dass** die Rohrstücke (2) ebenfalls Bohrungen (3) aufweisen.

6. Rohrverbinder nach den Ansprüchen 3 und 5, **dadurch gekennzeichnet, dass** die Bohrungen (3) der Rohrstücke (2) mit den Bohrungen (8) der Abstandsbleche (7) zusammenwirken und mittels eines Sicherungsmittels (10) zusammengefügt werden können.

7. Rohrverbinder nach Anspruch 1, **dadurch gekennzeichnet, dass** in der Mitte des Rohrverbinders (1) eine Kugel (9) als Verbindungsteil (6) der beiden Stäbe (4) vorgesehen ist.

8. Rohrverbinder nach Anspruch 7, **dadurch gekennzeichnet, dass** die Kugel (9) einen Durchmesser von ca. 0,5 bis 1,5 cm aufweist.

9. Rohrverbinder nach Anspruch 1, **dadurch gekennzeichnet, dass** die Stäbe (4) eine Länge von ca. 10 bis 30 cm aufweisen.

10. Rohrverbinder nach Anspruch 1, **dadurch gekennzeichnet, dass** der Rohrverbinder (1) aus einem C9D hergestellt ist.
